# EUROPÄISCHE PATENTSCHRIFT

(11) **EP 1 466 189 B1**
(45) Veröffentlichungstag und Bekanntmachung des Hinweises auf die Patenterteilung: **11.03.2009**
(21) Anmeldenummer: 03813887.1
(22) Anmeldetag: 10.12.2003
(51) Int. Cl.: G01S 13/84

(54) **VERFAHREN ZUR ABSTANDSBESTIMMUNG ZWISCHEN EINER BASISSTATION UND EINEM MOBILEN OBJEKT, SOWIE BASISSTATION UND IDENTIFIKATIONSSYSTEM FÜR EIN DERARTIGES VERFAHREN**
METHOD FOR DETERMINING THE DISTANCE BETWEEN A BASE STATION AND A MOBILE OBJECT, IN ADDITION TO A BASE STATION AND IDENTIFICATION SYSTEM FOR A METHOD OF THIS TYPE
PROCEDE SERVANT A DETERMINER LA DISTANCE ENTRE UNE STATION DE BASE ET UN OBJET MOBILE, ET STATION DE BASE ET SYSTEME D'IDENTIFICATION CONNUS POUR CE PROCEDE

(30) Priorität: 20.12.2002 DE 10261098
(43) Veröffentlichungstag der Anmeldung: 13.10.2004
(73) Patentinhaber: SIEMENS AKTIENGESELLSCHAFT, 80333 München (DE)
(72) Erfinder: GILA, Janos, A-2340 Mödling (AT); KONRAD, Wolfgang, A-2340 Mödling (AT); RENNER, Alexander, A-1120 Wien (AT)
(86) Internationale Anmeldenummer: PCT/EP2003/014014
(87) Internationale Veröffentlichungsnummer: WO 2004/059340

(56) Entgegenhaltungen:
- EP-A- 0 346 922
- EP-A- 1 107 162
- VANKKA J ET AL: "A MULTICARRIER QAM MODULATOR" IEEE TRANSACTIONS ON CIRCUITS AND SYSTEMS II: ANALOG AND DIGITAL SIGNAL PROCESSING, IEEE INC. NEW YORK, US, Bd. 47, Nr. 1, Januar 2000 (2000-01), Seiten 1-10, XP000951710 ISSN: 1057-7130

## Beschreibung

Die Erfindung betrifft ein Verfahren zur Abstandsbestimmung zwischen einem Schreib-/Lesegerät und zumindest einem mobilen Datenspeicher in einem Identifikationssystem mit mindestens einem mobilen Datenspeicher zur Erfassung von gegenstandsbezogenen Zustands- und/oder Prozessdaten wie z.B. in einem Versand-, Transport- und/ oder Fertigungssystem.

Als Stand der Technik sind Verfahren zur Abstandsbestimmung bekannt, wie z.B. das RADAR. Von einer stationären Basisstation werden Radarwellen ausgesandt und von einem mobilen oder beweglichen Objekt, wie z.B. Fahrzeuge, Personen, Transponder etc., zurückgestreut. Zur Abstandsbestimmung werden dabei vorzugsweise bekannte Modulationsverfahren auf Basis von kontinuierlichen sinusförmigen Signalen (Continuous Wave), wie z.B. das FMCW-, LFM- oder FSK-Modulationsverfahren, verwendet. Eine gängige Möglichkeit zur Durchführung der o.g. Modulationsverfahren ist die Verwendung eines IQ-Modulators (Quadratur-Amplitudenmodulator). Durch Trägerphasenmessung für verschiedene Frequenzen ist dann eine Abstandsbestimmung und ggf. auch eine Geschwindigkeitsbestimmung eines in der Nähe befindlichen mobilen Objekts möglich.

Aus der EP 1 107 162 A1 ist ein Verfahren zur Datenübertragung mit Laufzeitmessung zur Selektion von Empfangsdaten bekannt. In einem Schreib-Lese-Gerät wird die Phase eines im mobilen Datenspeicher mit Hilfsträger modulierten und rückgesendeten Datensignals am Anfang und am Ende eines Zeitschlitzes des gerasterten Datenstroms des Schreib-Lese-Geräts festgestellt. Eine ermittelte Phasendifferenz in Bezug zum ausgesendeten Datensignal des Schreib-Lese-Geräts ist proportional zum Abstand zwischen dem Schreib-Lese-Gerät und dem mobilen Datenspeicher, dessen rückgesendetes Datensignal empfangen wurde.

Aus der EP 0 933 648 A1 ist ein Doppler-Radar-Verkehrsmesssystem zur Verkehrsmessung und Verkehrsüberwachung auf Verkehrsstraßen, wie Autobahnen, Schienenwegen, Wasserstraßen, Schleusen oder dergleichen bekannt. Das System weist ein Radar-Sende/Empfangsgerät mit Mitteln zum Aussenden eines FMCW-Radars mit zwei benachbarten Frequenzen auf. Die Phasendifferenz der Differenzfrequenz dient zur Abstandsbestimmung, welche ihrerseits einer bestimmten Fahrspur zugeordnet werden kann, in der ein gemessener Verkehrteilnehmer, wie z.B. ein Fahrzeug, ein Schiff oder ein Zug, erfasst worden ist. Es kann gleichzeitig auch die Geschwindigkeit des Verkehrsteilnehmers sowie die Fahrrichtung auf Basis des Vorzeichens der Dopplerverschiebung ermittelt werden.

Weiterhin sind Identifikationssysteme bekannt, die eine oder mehrere stationäre Basisstationen - die so genannten Schreib/Lesegeräte - enthalten, welche Daten mit mobilen Datenspeichern als mobile Objekte über eine in der Regel auf Funk basierenden Datenübertragungsstrecke berührungslos austauschen. Derartige Systeme werden in technischen Einrichtungen eingesetzt, in welchen eine Vielzahl von Gegenständen bzw. Güter möglichst schnell und frei bewegt werden müssen. Die Gegenstände können dabei unterschiedlichster Art sein, z.B. Pakete in einer Versandeinrichtung, Montageteile in einer Fertigungsanlage, Gepäckstücke in einem Transportsystem und vieles mehr.

Ein Beispiel für ein derartiges Identifikationssystem ist im ISO-18000-4-MOD3-Standard mit dem Titel "Radio-frequency Identification Standard for Item Management - Air Interface" beschrieben. In der Norm ist vorgesehen, dass durch das Schreib-/Lesegerät eine Abfrage auf Vorhandensein eines mobilen Datenspeichers im Erfassungsbereich erfolgt. Dazu sendet dieses ein unmoduliertes HF-Trägersignal mit einer festgelegten HF-Trägerfrequenz, wie z.B. von 2,45 GHz, aus. Dieses Trägersignal kann passiv von einem in der Nähe befindlichen mobilen Datenspeicher z.B. durch sog. "Back-Scattering" zum Schreib-/Lesegerät mit Daten moduliert zurückgestreut werden und dann dort weiterverarbeitet werden.

Beim Betrieb von zwei oder mehreren, insbesondere von nahe zueinander angeordneten Basisstationen und mobilen Datenspeichern, wie z.B. bei benachbarten Fertigungsstraßen, ist darauf zu achten, dass es nicht zu unerwünschten Wechselwirkungen wie z.B. durch Überreichweiten zwischen den einzelnen Basisstationen und den jeweiligen mobilen Datenspeichern kommt. Es ist daher notwendig, dass der Erfassungsbereich der jeweiligen Basisstation eingeschränkt wird. Diese kann z.B. auf Basis einer Abstandsbestimmung zwischen der Basisstation und dem jeweiligen mobilen Datenspeicher erfolgen.

Bei der herkömmlichen Erzeugung der Frequenzen für die Abstandsbestimmung können starke Messungenauigkeiten auftreten. Ursache dafür ist, dass die Anfangsphasen der in der Basisstation erzeugten Frequenzen nicht zusammenhängen, d.h. nicht miteinander korrelieren. Dies ist z.B. dann der Fall, wenn die jeweiligen Frequenzen von verschiedenen Oszillatoren stammen oder die Frequenzerzeugung mittels eines PLL (Phase Locked Loop) geschieht. Um die gewünschte Korrelation zu erreichen, müssen daher die Signalphasen bei jeder Frequenz mit aufwendigen Schaltungen zuerst im Senderteil gemessen.

Der Erfindung liegt die Aufgabe zugrunde, die Messgenauigkeit einer Abstandsbestimmung zwischen einem Schreib-/Lesegerät und mindestens einem mobilen Datenspeicher zu erhöhen. Ferner sollen ein Schreib-/Lesegerät und ein Identifikationssystem angeboten werden.

Die Aufgabe der Erfindung wird dadurch gelöst, dass für das zu sendende HF-Trägersignals eine HF-Trägerfrequenz und eine Offsetfrequenz für eine IQ-Modulation vorgegeben werden. Mittels IQ-Modulation wird die HF-Trägerfrequenz zeitsequentiell so um die Offsetfrequenz erhöht und erniedrigt, dass die in einem modulierten HF-Trägersignal resultierenden HF-Trägereckfrequenzen eine gleiche Phase aufweisen. Es wird dann für beide HF-Trägereckfrequenzen die zugehörige Trägerphase zur Bildung der Phasendifferenz zeitsequentiell ermittelt.

Vorteilhafte Verfahrensvarianten werden in den Unteransprüchen 2 bis 6 beschrieben.

Für das Schreib-/Lesegerät wird die Aufgabe der Erfindung durch die Merkmale des Patentanspruchs 7 und für das Identifikationssystem durch die Merkmale des Patentanspruchs 8 gelöst.

Hierdurch wird erreicht, dass die Phase der beiden im HF-Trägersignal IQ-modulierten HF-Trägereckfrequenzen im Schreib-/Lesegerät gleich ist. Dadurch entstehen in vorteilhafter Weise nicht die sonst üblichen Phasensprünge bei einem Frequenzwechsel. Eine zusätzliche Messung am Sender im Schreib-/Lesegerät sowie die dafür benötigte Messzeit können dadurch vorteilhaft entfallen.

Nach einer vorteilhaften Verfahrensvariante wird zwischen zwei Abstandsbestimmungen die HF-Trägerfrequenz und/oder die Offsetfrequenz geändert. Dadurch kann bei Vorhandensein von Störungen in einem Frequenzband auf ein anderes Frequenzband ausgewichen werden. Die Frequenzbänder können dabei verschiedenen Frequenzkanälen entsprechen.

Nach einer weiteren vorteilhaften Verfahrensvariante können mehrere Abstandsbestimmungen und dann eine Mittelung über alle einzelnen Abstanosbestimmungen erfolgen.

Dadurch ist eine Erhöhung der Messgenauigkeit möglich. Die Abstandsbestimmung kann somit sehr genau durchgeführt werden.

Bei einer Verfahrensvariante ist die Basisstation ein Schreib-/Lesegerät und das mobile Objekt ein mobiler Datenspeicher. Durch frequenztechnische Abstimmung aufeinander ist vorteilhaft ein gutes Rückstreuverhalten für die Abstandsbestimmung, wie z.B. mittels des Backscatter-Verfahrens, gegeben.

Nach einer vorteilhaften Verfahrensvariante erfolgt die Abstandsmessung zwischen Schreib-/Lesegerät und mobilem Datenspeicher in einem Übertragungskanal, insbesondere in einem Übertragungskanal mit vier Kanälen, wobei auf den einzelnen Kanälen Signale unterschiedlicher Frequenzen ausgesendet werden.

Vorteilhafterweise ist das erfindungsgemäße Verfahren an das Übertragungsverfahren ISO-18000-4-MOD3-Standard angelehnt und übernimmt unter Modifikation zumindest einen dort vorhandenen Kanal.

Unter Anpassung des ISO-18000-4-MOD3-Standard kann der Übertragungskanal dem Notification-Channel des ISO-18000-4-MOD3-Standards entsprechen. U.U. kann dazu auch zumindest ein Kanal des Communication-Channel entsprechend dem o.g. Standard herangezogen werden.

Bei der jeweiligen Zuordnung können die Kanäle des Übertragungskanals R2-Kanäle im Notification-Channel des ISO-18000-4-MOD3-Standards sein.

Das Verfahren kann vorteilhaft in einem Identifikationssystem mit einer Basisstation und mit mindestens einem an Transportgegenständen angebrachten mobilen Datenspeicher zur Erfassung von gegenstandsbezogenen Zustands- und/oder Prozessdaten verwendet werden.

Das Verfahren kann erfindungsgemäß mit einer Basisstation mit zumindest einem Sendeempfänger und einer elektronischen Signalverarbeitung durchgeführt werden, wobei der Sendeempfänger zumindest einen digitalen IQ-Modulator, eine Sende- und Empfangsantenne zur Abstrahlung und zum Empfang der HF-Trägersignale, und einen Mischer für die HF-Trägersignale zur Bildung des Trägerphasensignals für die Abstandsbestimmung zwischen Basisstation und mobilem Objekt durch die elektronische Signalverarbeitung aufweist.

Ein wesentlicher Vorteil ist es, dass durch Nutzung schon bestehender Schaltungskomponenten, wie PLL zur Veränderung der HF-Trägerfrequenz und IQ-Modulator zur Datenmodulation eine Trägerphasenmessung möglich ist. Es ist somit eine Abstandsmessung mit ausreichender hoher Genauigkeit ohne zusätzlichen Aufwand von elektronischen Schaltungskomponenten möglich.

Die Erfindung wird anhand der nachfolgenden Figuren näher erläutert. Dabei zeigt
- FIG 1 :: ein Beispiel für den Einsatz einer Basisstation als Schreib-/Lesegerät und mehrere mobile Datenspeicher als beispielhaft mobile Objekte,
- FIG 2 :: eine beispielhafte Datenstruktur eines Übertra- gungskanals,
- FIG 3 :: einen beispielhaften Aufbau eines Sendeempfängers einer Basisstation, mit einem IQ-Modulator und ei- nem Mischer zur Bildung des Trägerphasensignals, und
- FIG 4 :: ein beispielhaftes Konstellationsdiagramm zur gra- fischen Darstellung von beispielhaften Messpunkten der jeweiligen Phase von je zwei HF-Trägereckfre- quenzen.

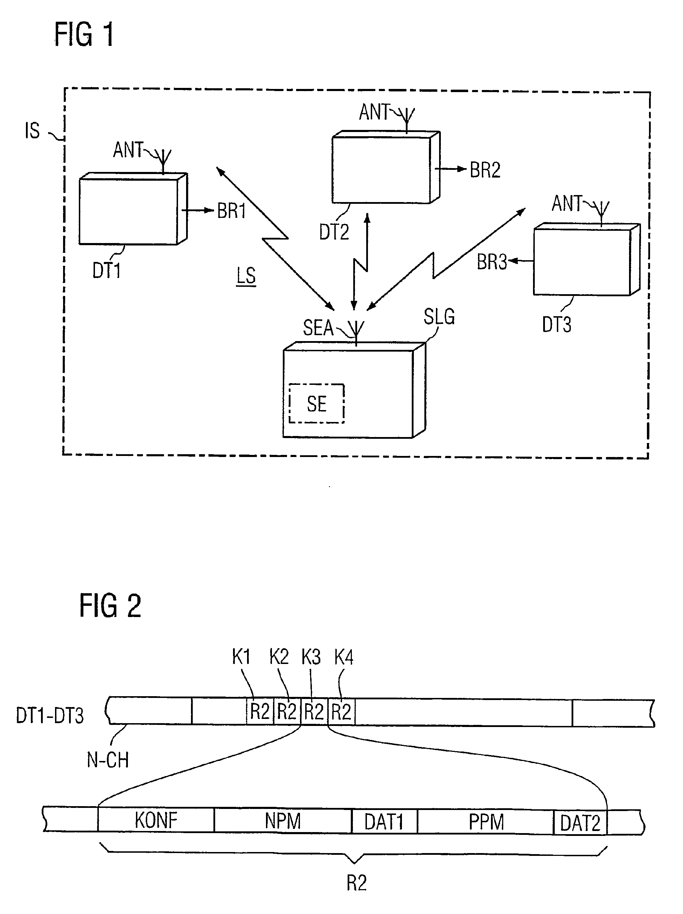

FIG 1 zeigt ein Beispiel für den Einsatz einer Basisstation SLG als Schreib-/Lesegerät und mehrere mobile Datenspeicher DT1-DT3. Zusammen mit einer zwischen den Datenspeichern DT1-DT3 und der Basisstation SLG liegenden Luftschnittstelle LS bilden diese ein Identifikationssystem IS. Mögliche unterschiedliche Bewegungsrichtungen BR1-BR3 der mobilen Datenspeicher DT1-DT3 sind beispielhaft in der Figur eingetragen. Zur Datenkommunikation verfügen die Datenspeicher DT1-DT3 sowie die Basisstation SLG über je eine Antenne ANT,SEA. In der Basisstation SLG ist in punktstrichlierter Darstellung ein Senderempfänger SE zu sehen, welcher der Durchführung des erfindungsgemäßen Verfahrens dient.

FIG 2 zeigt eine beispielhafte Datenstruktur eines Übertragungskanals N-CH für die Kommunikation zwischen mobilem Datenspeicher DT1-DT3 und Schreib-/Lesegerät SLG. Die Datenstruktur des Übertragungskanals N-CH ist dabei dem Notification-Channel im ISO-18000-4-MOD3-Standard angelehnt. Zur Durchführung einer oder mehrerer Abstandsmessungen sind nun ein oder mehrere der Kanäle K1 bis K4 vorgesehen. Bei Anlehnung an den ISO-18000-4-MOD3-Standard entsprechen diese Kanäle K1 bis K4 den R2-Kanälen R2 im Notification-Channel des ISO-18000-4-MOD3-Standards. In der vorliegenden Figur ist eine beispielhafte Unterstruktur eines R2-Kanals R2 dargestellt, welcher fünf Zeitblöcke aufweist. Im ersten Block KONF erfolgt die Programmierung des PLL für die Einstellung der HF-Trägerfrequenz fo. Im folgenden Block NPM wird ein negativer Frequenzsprung auf die untere HF-Trägereckfrequenz fo-df durch den IQ-Modulator MOD eingestellt. Anschließend wird im Trägerphasensignal PS die erste Trägerphase PH1 und die entsprechenden Messdaten DAT1 z.B. durch einen digitalen Signalprozessor (DSP) weiterverarbeitet. Nachfolgend erfolgt der positive Frequenzsprung im Zeitblock PPM auf die Frequenz fo+df, zusammen mit den ersten Messdaten DAT1 wird mit den zweiten Messdaten DAT2 die Trägerphasendifferenz dPH gebildet. Für den o.g. Standard ist somit eine Abstandsmessung in einem R2-Kanal in ca. 0.5 ms möglich.

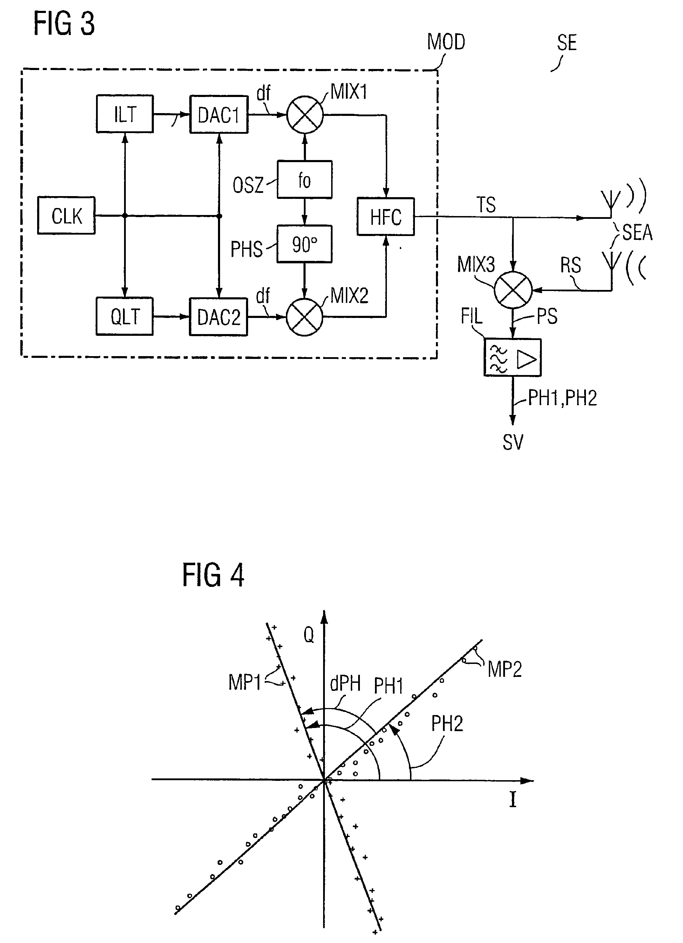

FIG 3 zeigt einen beispielhaften Aufbau eines Sendeempfängers SE einer Basisstation SLG, mit einem IQ-Modulator MOD und einem Mischer MIX3 zur Bildung des Trägerphasensignals PS. Der IQ-Modulator MOD weist im Beispiel der Figur zwei so genannte "Look-up Tables" ILT,QLT auf, welche digitale Abtastwerte für die notwendige Signalwellenform für die Modulation enthalten. Zeitlich über einen Taktgenerator CLK gesteuert werden die Abtastwerte je einem Digital/Analog-Umsetzer DAC1, DAC2 zugeführt und in je ein analoges Signal umgewandelt. Die analogen Signale werden nun in Quadratur mittels zweier um 90° verschobenen HF-Trägerfrequenzen OSZ,fo,PHS durch die beiden Mischer MIX1, MIX2 dem Träger aufmoduliert. Mit einem HF-Combiner HFC werden die beiden gemischten Signale zu einem HF-Trägersignal TS zusammengefasst und einer Antenne SEA zum Senden zugeführt. Ein von einem mobilen Objekt DT1-DT3 zurückgestreutes HF-Trägersignal RS wird dann zusammen mit dem zu sendenden HF-Trägersignal TS mit dem Mischer MIX3 zu einem Trägerphasensignal PS vermischt. Über einen nachgeschalteten Filter FIL, wie z.B. einen Tiefpass, werden störende Frequenzanteile entfernt. Die jeweilige Phase PH1,PH2 wird dann einer elektronischen Signalverarbeitung SV zugeführt und nach Differenzbildung dPH der zugehörige Abstand rechnerisch bestimmt.

FIG 4 zeigt ein beispielhaftes Konstellationsdiagramm I,Q zur grafischen Darstellung von beispielhaften Messpunkten MP1,MP2 für die Abstandsbestimmung. Es werden je zwei Messpunkte MP1, MP2 für die jeweilige Phase PH1,PH2 von je zwei HF-Trägereckfrequenzen fo+df,fo-df eingetragen. Die eingezeichneten Geraden stellen dabei exemplarisch das Mittelungsergebnis für die Phasen PH1, PH2 dar.

## Patentansprüche

1. Verfahren zur Abstandsbestimmung zwischen einem Schreib-/Lesegerät (SLG) und einem mobilen Datenspeicher (DT1-DT3) eines Identifikationssystems (IS), wobei im Schreib-/Lesegerät (SLG)
a) ein gesendetes HF-Trägersignal (TS) und ein vom mobilen Datenspeicher (DT1-DT3) zurückgestreutes HF-Trägersignal (RS) zugleich miteinander gemischt (MIX3) werden, wobei ein Trägerphasensignal (PS) entsteht, und
b) aus der Phasendifferenz der Abstand zwischen Schreib-/Lesegerät (SLG) und dem jeweiligen mobilen Datenspeicher (DT1-DT3) bestimmt wird,
**dadurch gekennzeichnet, dass**
c) für das zu sendende HF-Trägersignal (TS) eine HF-Trägerfrequenz (fo) und eine Offsetfrequenz (df) für eine IQ-Modulation (MOD) vorgegeben werden,
d) mittels IQ-Modulation die HF-Trägerfrequenz (fo) zeitsequentiell so um die Offsetfrequenz (df) erhöht und erniedrigt wird, dass die in einem modulierten HF-Trägersignal (TS) resultierenden HF-Trägereckfrequenzen (fo+df, fo-df) eine gleiche Phase aufweisen, und dann
e) für beide HF-Trägereckfrequenzen (fo+df, fo-df) die zugehörige Trägerphase (PH1, PH2) aus dem Trägerphasensignal (PS) zur Bildung der Phasendifferenz (dPH) zeitsequentiell ermittelt wird.

2. Verfahren nach Anspruch 1, wobei zwischen zwei Abstandsbestimmungen die HF-Trägerfrequenz (fo) und/oder die Offsetfrequenz (df) geändert werden.

3. Verfahren nach Anspruch 1 oder 2, wobei mehrere Abstandsbestimmungen erfolgen und dann eine Mittelung erfolgt.

4. Verfahren nach einem der vorangegangenen Ansprüche, wobei die Abstandsbestimmung zwischen Schreib-/Lesegerät (SLG) und mobilem Datenspeicher (DT1-DT3) in einem Übertragungskanal (N-CH) für die Kommunikation zwischen mobilem Datenspeicher (DT1-DT3) und Schreib-/Lesegerät (SLG) erfolgt.

5. Verfahren nach Anspruch 4, wobei die Abstandsbestimmung in einem oder mehreren Zeitabschnitten (K1-K4) des Übertragungskanals (N-CH) erfolgt.

6. Verfahren nach Anspruch 4 oder 5, wobei die Datenübertragung zwischen Schreib-/Lesegerät (SLG) und mobilem Datenspeicher (DT1-DT3) nach dem ISO-18000-4-MOD3-Standard erfolgt.

7. Schreib-/Lesegerät mit einem Sendeempfänger (SE), wobei der Sendeempfänger (SE) zumindest einen digitalen IQ-Modulator (MOD), eine Sende- und Empfangsantenne (SEA) zur Abstrahlung und zum Empfang der HF-Trägersignale (TS, RS) und einen Mischer (MIX3) für die HF-Trägersignale (TS, RS) zur Bildung des Trägerphasensignals (PS) für die Abstandsbestimmung zwischen Schreib-/Lesegerät (SLG) und mobilem Datenspeicher (DT1-DT3) aufweist, wobei das Schreib-/Lesegerät weiterhin eine elektronische Signalverarbeitung (SV) zumindest zur Weiterverarbeitung des Trägerphasensignals (PS) aufweist,
**dadurch gekennzeichnet, dass**
der Sendeempfänger (SE) und die elektronische Signalverarbeitung (SV) derart ausgebildet sind, dass sie im Betrieb des Schreib-/Lesegeräts ein Verfahren nach einem der vorangegangenen Ansprüche ausführen.

8. Identifikationssystem mit zumindest einem Schreib-/Lesegerät (SLG) nach Anspruch 7 und mindestens einem mobilen Datenspeicher (DT1-DT3) zur Erfassung von gegenstandsbezogenen Zustands- und/oder Prozessdaten.

## Claims

1. Method for determining the distance between a read/write device (SLG) and a mobile data memory (DT1-DT3) of an identification system (IS), with, in the read/write device (SLG)
a) a transmitted HF carrier signal (TS) and a HF carrier signal (RS) that has been backscattered by the mobile data memory (DT1-DT3) being mixed (MIX3) together, thereby obtaining a carrier phase signal (PS), and
b) the distance between the read/write device (SLG) and the respective mobile data memory (DT1-DT3) being determined from the phase difference,
**characterised in that**
c) for the HF carrier signal (TS) to be transmitted, a HF carrier frequency (fo) and an offset frequency (df) are predetermined for an IQ modulation (MOD)
d) the HF carrier frequency (fo) is sequentially increased and decreased by the offset frequency (df) by means of IQ modulation such that the HF carrier base frequencies (fo+df, fo-df) resulting in a modulated HF carrier signal (TS) have an identical phase, and then
e) for the two HF carrier base frequencies (fo+df, fo-df) the associated carrier phase (PHI, PH2) is determined sequentially from the carrier phase signal (PS) in order to form the phase difference (dPH).

2. Method according to claim 1, with the HF carrier frequency (fo) and/or the offset frequency (df) being changed between two distance determinations.

3. Method according to claim 1 or 2, wherein multiple distance determinations are made and subsequently averaged.

4. Method according to one of the preceding claims, with the distance between a read/write device (SLG) and a mobile data memory (DT1-T3) being determined in a transmission channel (N-CH) for the communication between the mobile data memory (DT1-DT3) and the read/write device (SLG).

5. Method according to claim 4, with the distance being determined in one or several time segments (K1-K4) of the transmission channel (N-CH).

6. Method according to claim 4 or 5, with the data being transmitted between the read/write device (SLG) and the mobile data memory (DT1-DT3) in accordance with the ISO-18000-4- MOD3 standard.

7. Read/write device with a transceiver (SE), with the transceiver (SE) having at least one digital IQ modulator (MOD), a transceiver antenna (SEA) to transmit and receive the HF carrier signals (TS, RS) and a mixer (MIX3) for the HF carrier signals (TS, RS) for forming the carrier phase signal (PS) in order to determine the distance between the read/write device (SLG) and the mobile data memory (DT1-DT3), with the read/write device also having an electronic signal processor (SV) at least to further process the carrier phase signal (PS),
**characterised in that**
the transceiver (SE) and the electronic signal processor(SV) are embodied such that during operation of the read/write device, they implement a method according to one of the preceding claims.

8. Identification system with at least one read/write device (SLG) according to claim 7 and at least one mobile data object (DT1-DT3) for recording object-related status and/or process data.

## Revendications

1. Procédé de détermination de la distance entre un appareil (SLG) d'écriture/lecture et une mémoire (DT1-DT3) de données mobile d'un système (IS) d'identification, dans lequel dans l'appareil (SLG) d'écriture/lecture
a) on mélange (MIX3) ensemble, en même temps, un signal (TS) de porteuse HF émis et un signal (RS) de porteuse HF rediffusé par la mémoire (DT1-DT3) de données mobile, un signal (PS) de phase de porteuse étant créé, et
b) on détermine, à partir de la différence de phase, la distance entre l'appareil (SLG) d'écriture/lecture et la mémoire (DT1-DT3) de données mobile respective,
**caractérisé en ce que**
c) on prescrit, pour le signal (TS) de porteuse HF à émettre, une fréquence (fo) de porteuse HF et une fréquence (df) de décalage pour une modulation IQ (MOD),
d) au moyen de la modulation IQ, on élève et on abaisse la fréquence (fo) de la porteuse HF séquentiellement dans le temps de la fréquence (df) de décalage, de façon à ce que les fréquences (fo+df, fo-df) de coupure de porteuse HF se traduisant en un signal (TS) de porteuse HF modulé aient une même phase, et ensuite
e) pour les deux fréquences (fo+df, fo-df) de coupure de porteuse HF, on détermine, séquentiellement dans le temps, la phase (PHA, PH2) de porteuse associée à partir du signal (PS) de phase de porteuse pour la formation de la différence (dPH) de phase.

2. Procédé suivant la revendication 1, dans lequel on modifie la fréquence (fo) de porteuse HF et/ou la fréquence (df) de décalage entre deux déterminations de la distance.

3. Procédé suivant la revendication 1 ou 2, dans lequel on effectue plusieurs déterminations de la distance et on effectue ensuite une moyenne.

4. Procédé suivant l'une des revendications précédentes, dans lequel la détermination de la distance entre l'appareil (SLG) d'écriture/lecture et la mémoire (DT1-DT3) de données mobile s'effectue dans un canal (N-CH) de transmission pour la communication entre la mémoire (DT1-DT3) de données mobile et l'appareil (SLG) d'écriture/lecture.

5. Procédé suivant la revendication 4, dans lequel la détermination de la distance s'effectue dans un ou dans plusieurs créneaux (K1-K4) temporels du canal (N-CH) de transmission.

6. Procédé suivant la revendication 4 ou 5, dans lequel la transmission de données entre l'appareil (SLG) et l'écriture/lecture et la mémoire (DT1-DT3) de données mobile s'effectue suivant la norme ISO-18000-4-MOD3.

7. Appareil d'écriture/lecture comprenant un émetteur récepteur (SE), l'émetteur récepteur (SE) ayant au moins un modulateur IQ (MOD) numérique, une antenne (SEA) d'émission et de réception pour émettre et pour recevoir les signaux (TS, RS) de porteuse HF et un mélangeur (MIX3) des signaux (TS, RS) de porteuse HF pour la formation du signal (PS) de phase de porteuse pour la détermination de la distance entre l'appareil (SLC) d'écriture/lecture et la mémoire (DT1-DT3) de données mobile, l'appareil d'écriture/lecture comprenant, en outre, un traitement (SV) électronique du signal pour traiter davantage au moins le signal (PS) de phase de porteuse,
**caractérisé en ce que**,
l'émetteur récepteur (SE) et le traitement (SV) électronique du signal sont tels qu'ils effectuent, lorsque l'appareil d'écriture/lecture fonctionne, un procédé suivant l'une des revendications précédentes.

8. Système d'identification ayant au moins un appareil (SLG) d'écriture/lecture suivant la revendication 7 et au moins une mémoire (DT1-DT3) de données mobile pour la détection de données d'état et/ou de processus se rapportant à un objet.
